# EUROPÄISCHE PATENTSCHRIFT

(11) **EP 0 706 928 B1**
(45) Veröffentlichungstag und Bekanntmachung des Hinweises auf die Patenterteilung: **13.05.1998**
(21) Anmeldenummer: 95115582.9
(22) Anmeldetag: 02.10.1995
(51) Int. Cl.: B62D 1/04, B60R 16/00

(54) **Kraftfahrzeuglenkrad**
Motor vehicle steering wheel
Volant pour véhicule à moteur

(30) Priorität: 11.10.1994 DE 4436291
(43) Veröffentlichungstag der Anmeldung: 17.04.1996
(73) Patentinhaber: ADAM OPEL AG, 65423 Rüsselsheim (DE)
(72) Erfinder: Kahlstatt, Michael, Dipl.-Ing. (FH), D-61440 Oberursel (DE)
(74) Vertreter: Bergerin, Ralf, Dipl.-Ing.

(56) Entgegenhaltungen:
- DE-A- 2 740 364
- DE-A- 2 928 951
- DE-C- 408 106
- DE-U- 9 320 309
- FR-A- 2 381 653
- FR-A- 2 402 937
- PATENT ABSTRACTS OF JAPAN vol. 9 no. 215 (M-409) [1938] ,3.September 1985 & JP-A-60 076443 (AISHIN SEIKI) 30.April 1985,

## Beschreibung

Die Erfindung bezieht sich auf ein Lenkrad eines Kraftfahrzeuges, wobei bekannt ist, daß solche aus Pralltopf, zumindest einer Speiche sowie einem Lenkradkranz bestehenden Lenkräder mit elektrischen Kontakten in Form von Schaltern oder Tastern bestückt sind. Die Kontakte sind von Hand bedienbar, wodurch Funktionen ausgelöst werden. So ist eine Hupe zu betätigen, aber es werden auch zunehmend weitere Funktionen (Radiobedienung, Fensterheber, Gangvorwahl ...) ins Lenkrad integriert.

Kraftfahrzeuglenkräder der genannten Art sind beispielsweise in der DE-OS 29 28 951, DE-OS 29 43 907, DE-OS 30 18 247, DE-OS 30 38 948 oder der DE-OS 41 37 975 beschrieben. Als Ziel wird angegeben, daß Bedienelemente möglichst übersichtlich angeordnet werden sollen und daß eine möglichst geringe Ablenkung des Fahrers bei sicherer Bedienbarkeit erfolgen soll. Des weiteren sollen Gefährdungen bei Unfällen ausgeschlossen werden. In der DE-OS 29 28 951 ist auch angegeben, daß bestimmte Schalter von einem bestimmten Finger einer den Lenkradkranz umschließenden Hand besonders gut bedienbar sind.

Die Dokumente JP-A-60076443 (Abstract) und DE-A-2740364 offenbaren ein Kraftfahrzeuglenkrad mit einem Lenkradkranz und mehreren von Hand zu betätigenden elektrischen Kontakten, die als Schalter an einem Pralltopf des Lenkrades angeordnet sind, wobei die Bedienelemente der Kontakte den Pralltopf seitlich überragen und damit in einen Freiraum innerhalb des Lenkradkranzes hineinragen und die Kontakte von einem Finger der den Lenkradkranz umschließenden Hand bedienbar sind. DE-A-2740364 offenbart ein Kraftfahrzeuglenkrad nach dem Oberbegriff des Anspruchs 1.

Griffhaltungen an einem Lenkrad sind sehr individuell. Jeder Mensch entwickelt bestimmte Eigenarten, einen Lenkradkranz zu ergreifen. Somit ist es nahezu unmöglich, eine für Jedermann optimale Lenkradgestaltung vorzunehmen, was auch für die Anordnung der Bedienelemente gilt. Schalter oder Taster, die auf einem Pralltopf oder auf Lenkradspeichen angeordnet sind, machen es oft erforderlich, daß eine Hand zur Bedienung vom Lenkradkranz genommen wird. Anderenfalls sind sie nur bei einer bestimmten Griffhaltung erreichbar. Einzelne Finger der Hände werden aber unterschiedlich in die Griffhaltung einbezogen (belastet), was auch von Ermüdungen abhängig wechseln kann. Die Bedienung von Kontakten macht es bei bekannten Lenkrädern erforderlich, die gerade gewählte Griffhaltung aufzugeben. Die Konzentration auf die Fahrsituation wird geschwächt und das Reaktionsvermögen verringert sich.

Die Betätigungseinrichtung am Lenkrad nach DE-U-9320309 schafft hier teilweise Abhilfe, da hier mehrere Bedienflächen zur Betätigung eines Kontaktes vorgesehen sind. Es sind jedoch auch oberhalb einer Lenkradspeiche Bedienflächen vorgesehen, durch die Verletzungsrisiken bestehen und über die irrtümliche Bedienungen möglich sind. Es sind nicht alle Bedienflächen ohne Veränderung der Griffhaltung erreichbar.

Es ist Aufgabe der Erfindung, den Komfort bei der Bedienung von Kontakten am Lenkrad zu verbessern und damit die Sicherheit beim Fahren zu erhöhen. Des weiteren sollen Unfallrisiken durch Betätigungselemente ausgeschlossen werden.

Zur Lösung dieser Aufgaben zeichnet sich das erfindungsgemäße Kraftfahrzeuglenkrad durch die im Patentanspruch 1 angegebenen Merkmale aus. Weitere Einzelheiten ergeben sich aus den Patentansprüchen 2 bis 4.

Es sind Bedienelemente an einem Lenkrad vorgesehen, mit deren Hilfe elektrische Kontakte zu schließen oder zu öffnen sind, wobei die Bedienelemente seitlich an einem Pralltopf oder an Speichen des Lenkrades angeordnet und sowohl von oben als auch von unten bedienbar sind. Die Bedienelemente ragen in einen Freiraum innerhalb eines Lenkradkranzes hinein und können von verschiedenen Fingern einer den Lenkradkranz umschließenden Hand erreicht werden. Speziell kann die Bedienung von oben durch den Daumen einer Hand oder von unten durch einen der anderen Finger erfolgen. Durch die Bedienelemente kann entweder nur ein einziger Kontakt betätigt werden (indem das Bedienelement sowohl bei Druck von oben als auch bei Druck von unten in die gleiche Richtung um eine Achse verschwenkt) oder es sind zwei Kontakte zu bedienen. Dann ist das Bedienelement in zwei verschiedenen Richtungen um eine Achse verschwenkbar, wobei es derart gestaltet ist, daß beide Kontakte sowohl von oben als auch von unten bedienbar sind. Dabei sind die Bedienelemente derart gestaltet, daß sie entweder vom Lenkradkranz aus in Richtung des Pralltopfes oder senkrecht zur Lenkradkranzebene mit Kräften zu beaufschlagen sind.

Details der Erfindung werden anhand eines Ausführungsbeispiels erläutert. In den zugehörigen Zeichnungen zeigt:
- Fig. 1:: eine Draufsicht auf ein erfindungsgemäßes Kraftfahrzeuglenkrad;
- Fig. 2:: Schnitt II-II aus Figur 1 bei am Lenkradkranz anliegender rechter Hand;
- Fig. 3:: Schnitt III-III aus Figur 1 bei am Lenkradkranz anliegender Hand.

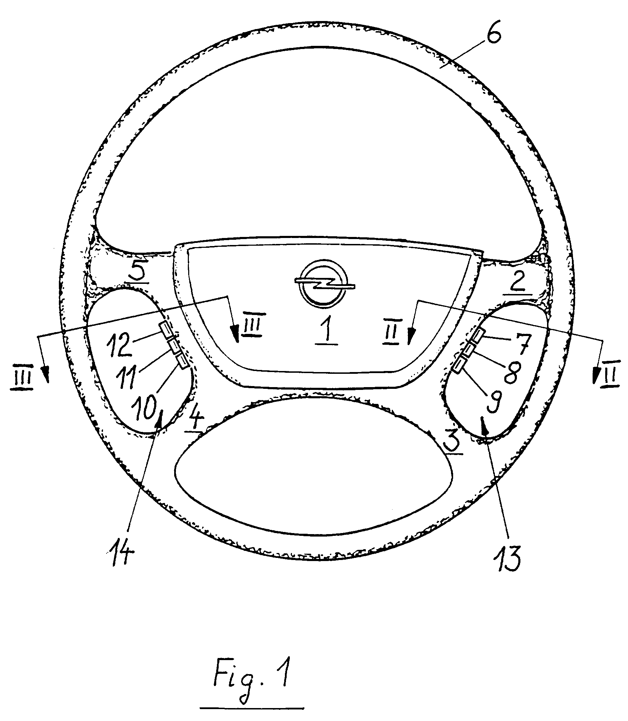

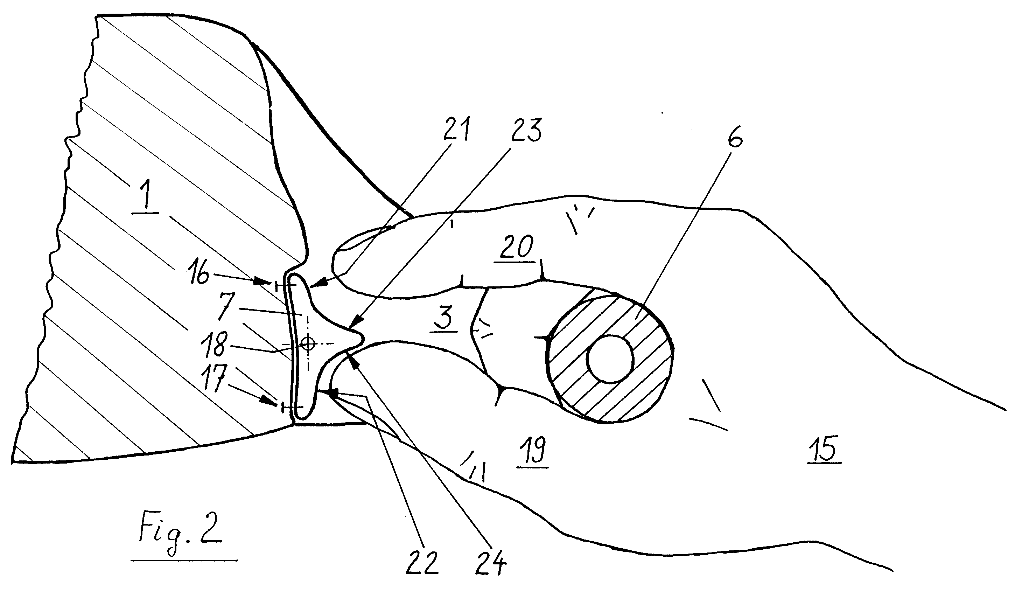

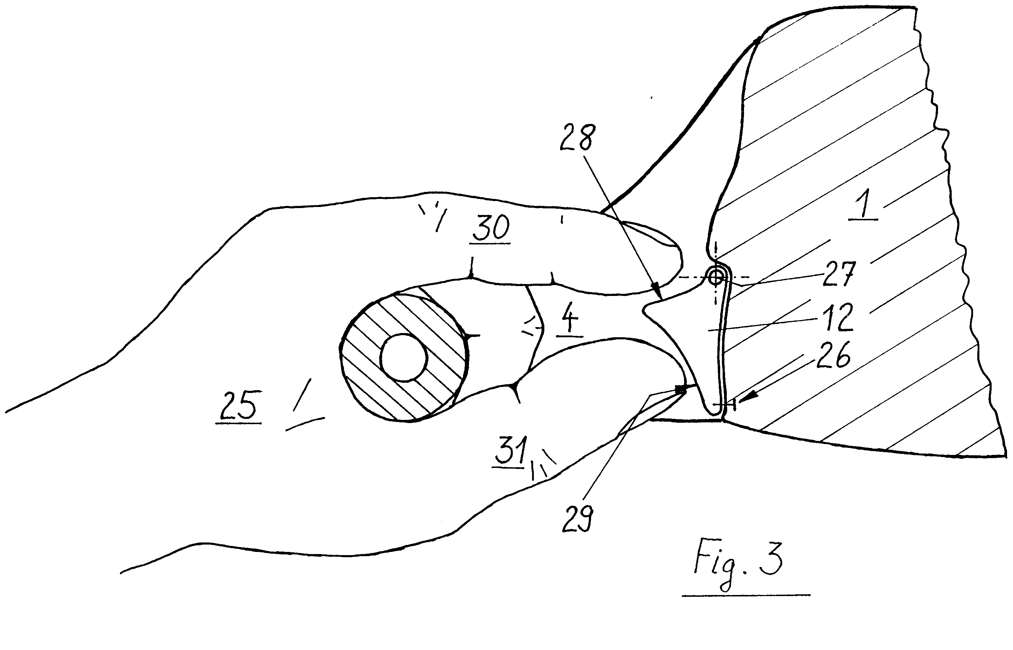

Aus Figur 1 wird der prinzipielle Aufbau eines erfindungsgemäßen Kraftfahrzeuglenkrades deutlich. Es besteht aus einem Pralltopf 1, Lenkradspeichen 2 bis 5 sowie aus einem Lenkradkranz 6. Im Ausführungsbeispiel gehen die Speichen 2 bis 5 kontinuierlich in den Pralltopf 1 über und sind wie dieser mit elastischem Material umschäumt. Rechts und links sind seitlich des Pralltopfes 1 Bedienelemente 7 bis 12 von Kontakten angeordnet, die in den Figuren 2 und 3 näher verdeutlicht sind. Die Bedienelemente 7 bis 12 ragen in Freiräume 13, 14 innerhalb des Lenkradkranzes 6 und sind von dem Lenkradkranz 6 aus erreichbar, ohne daß dieser losgelassen werden muß.

Die Bedienelemente 7 bis 12 stellen keine Gefährdung für einen Fahrzeugführer dar, da sie auch bei einem Aufprall auf das Lenkrad nicht getroffen werden können.

Die Schnittdarstellungen in den Figuren 2 und 3 sind schematischer Natur, wobei für die Erfindung unwesentliche Details des Lenkrades nicht gezeigt sind.

In den Freiraum 13 ragen die Bedienelemente 7 bis 9, die von einer rechten Hand 15 eines Fahrzeugführers bedienbar sind. Mit Hilfe jedes der Bedienelemente 7 bis 9 sind jeweils zwei Kontakte 16, 17, die nur zeichnerisch angedeutet sind, bedienbar. Das in Figur 2 gezeigte Bedienelement 7 ist um eine Achse 18 in zwei Drehrichtungen entgegen Federkraft verschwenkbar. Bei Verschwenkung in Uhrzeigerrichtung wird der Kontakt 17 geschlossen, bei Verschwenkung entgegen Uhrzeigerrichtung ist der Kontakt 16 zu betätigen. Das Bedienelement 7 ist (wie auch die Bedienelemente 8 und 9) derart geformt, daß beide Kontakte 16, 17 sowohl von oben durch den Daumen 19 der Hand 15 als auch von unten durch den Zeigefinger 20 oder einen anderen unterhalb des Lenkradkranzes 6 liegenden Finger zu betätigen sind. Das Bedienelement 7 weist dazu vier Bedienungsflächen 21 bis 24 auf. Die Bedienflächen 21, 22 gestatten einen Druck vom Lenkradkranz 6 aus in Richtung des Pralltopfes 1. Die Bedienflächen 23, 24 erlauben eine Betätigung in Richtungen, die etwa senkrecht zu einer Lenkradkranzebene liegen, also nach oben und unten. Drückt der Zeigefinger 20 auf die Bedienfläche 21, wird der Kontakt 16 betätigt, drückt dieser Finger 20 auf die Bedienfläche 23 ist der Kontakt 17 bedienbar. Mit Hilfe des Daumens 19 kann durch Druck auf die Bedienfläche 22 der Kontakt 17 und durch Druck auf die Bedienfläche 24 der Kontakt 16 betätigt werden. Je nach Griffposition, individuellen Eigenarten oder momentaner Belastung der Finger der Hand 15 kann also wahlweise eine Bedienung der Bedienelemente 7 bis 9 von oben oder unten erfolgen, ohne daß die Hand 15 vom Lenkradkranz 6 genommen werden muß. Welcher Finger 19, 20 der Hand 15 für die Bedienung genutzt wird, unterliegt der freien Auswahl des Fahrzeugführers. Die Kontakte 16, 17 sind beispielsweise für Funktionen wie Fenster Auf/Ab, Schiebedach Auf/Zu, Radiosender Vor-/Rücklauf, Radio Laut/Leise ... verwendbar.

In Figur 3 ist die linke Hand 25 des Fahrzeugführers am Lenkradkranz 6 festhaltend gezeigt, wobei auch hier (durch die Lage der Schnitte in Figur 1) oben und unten gegenüber der realen Lenkradposition vertauscht dargestellt ist. Von den Bedienelementen 10 bis 12 ist das Bedienelement 12 gezeigt. Hier ist nur jeweils ein elektrischer Kontakt 26 zu betätigen, indem das Bedienelement 12 entgegen Uhrzeigerrichtung um eine Achse 27 verschwenkt wird. Das Bedienelement 12 weist zwei Bedienflächen 28, 29 auf. Die Bedienfläche 28 ist von einem Zeigefinger 30 mit einer Kraft beaufschlagbar, die etwa senkrecht zur Lenkradkranzebene ausgerichtet ist. Hier können auch die anderen, unterhalb des Lenkradkranzes 6 liegenden Finger der Hand 25 benutzt werden. Die Bedienfläche 29 kann vom Daumen 31 der Hand 25 mit einer Kraft in Richtung Pralltopf 1 beaufschlagt werden. Unabhängig davon, ob das Bedienelement 12 von oben oder von unten bedient wird, ist der Kontakt 26 problemlos zu betätigen, ohne daß die Griffhaltung der Hand 25 gelöst oder wesentlich verändert werden muß. Die Kontakte 26 der Bedienelemente 10 bis 12 sind beispielsweise nutzbar für Funktionen wie Lichthupe, Radio An/Aus, Scheibenwischer An/Aus ...

Bedienelemente mit einem und mit zwei Kontakten können auch vermischt am Lenkrad angeordnet werden. Sie können auch mehr in Richtung der Lenkradspeichen 2 und 5 verschoben oder zum Teil an diesen Speichen 2, 5 angeordnet sein. In jedem Falle sollte die Bedienung von verschiedenen Fingern einer den Lenkradkranz 6 umschließenden Hand 15, 25 sowohl von oben als auch von unten möglich sein. Gefährdungen, die von den Bedienelementen bei einem Unfall ausgehen, sollten wie gezeigt ausgeschlossen werden.

## Patentansprüche

1. Kraftfahrzeuglenkrad mit einem Lenkradkranz (6) und zumindest einem von Hand zu betätigenden elektrischen Kontakt (16, 17; 26), der als Schalter oder als Taster an einem Pralltopf (1) oder an einer Speiche (2 bis 5) des Lenkrades angeordnet ist, wobei zur Betätigung des Kontaktes (16, 17; 26) ein Bedienelement (7 bis 12) mit mehreren Bedienflächen (21 bis 24; 28, 29) vorgesehen ist, welches mit den Bedienflächen (21 bis 24; 28, 29) den Pralltopf (1) bzw. die Speiche (2 bis 5) einseitig überragt und damit in nur einen Freiraum (13, 14) innerhalb des Lenkradkranzes (6) hineinragt und wobei der Kontakt (16, 17; 26) über das Bedienelement (7 bis 12) von verschiedenen Fingern (19, 20; 30, 31) einer den Lenkradkranz (6) umschließenden Hand (15; 25) sowohl von oben als auch von unten bedienbar ist, **gekennzeichnet durch** einen Bedienungswulst, der ein annähernd parallel zu einer Achse (18, 27) des Bedienelementes (7 bis 12) ausgerichteter Bestandteil des Bedienelementes (7 bis 12) ist und der zur Bildung zumindest einer Bedienfläche (23, 24; 28) dient und durch zumindest eine weitere, geneigt zu der Bedienfläche (23, 24; 28) des Bedienungswulstes ausgerichtete von dem Bedienelement (7 bis 12) gebildete Bedienfläche (21, 22; 29), wobei winklig zueinander auf die beiden Bedienflächen (21 bis 24; 28, 29) ausgerichtete Bedienkräfte ein gleichgerichtetes Verschwenken des Bedienelementes (7 bis 12) um die Achse (18; 27) bewirken.

2. Kraftfahrzeuglenkrad nach Anspruch 1, **dadurch gekennzeichnet,** daß die Bedienelemente (7 bis 12) der Kontakte (16, 17; 26) derart geformt und am Lenkrad angeordnet sind, daß sie sowohl durch Druck in Richtung des Pralltopfes (1) als auch durch Druck in einer senkrecht zu einer Lenkradkranzebene gelegenen Richtung bedienbar sind.

3. Kraftfahrzeuglenkrad nach Anspruch 1 oder 2, **dadurch gekennzeichnet,** daß mittels des Bedienelementes (10 bis 12) ein elektrischer Kontakt (26) zu betätigen ist, indem das Bedienelement (10 bis 12) sowohl bei Bedienung von oben als auch bei Bedienung von unten in die gleiche Richtung um eine Achse (27) verschwenkt.

4. Kraftfahrzeuglenkrad nach Anspruch 1 oder 2, **dadurch gekennzeichnet,** daß mittels des Bedienelementes (7 bis 9) zwei elektrische Kontakte (16, 17) zu betätigen sind, wobei beide Kontakte (16, 17) sowohl von oben als auch von unten bedienbar sind, indem das Bedienelement von oberhalb und unterhalb des Lenkradkranzes (6) befindlichen Fingern (19, 20) in jeweils zwei Richtungen um eine Achse (18) verschwenkbar ist.

## Claims

1. Motor vehicle steering wheel with a steering wheel rim (6) and at least one electrical contact (16, 17; 26) which is to be operated by hand and which is arranged as a switch or button on an impact absorber (1) or on a spoke (2 to 5) of the steering wheel, wherein for operation of the contact (16, 17; 26) there is provided an operating element (7 to 12) with several operating surfaces (21 to 24; 28, 29), which with the operating surfaces (21 to 24; 28, 29) protrudes on one side beyond the impact absorber (1) or the spoke (2 to 5) and so extends into only one free space (13, 14) within the steering wheel rim (6) and wherein the contact (16, 17; 26) can be operated both from above and from below via the operating element (7 to 12) by different fingers (19, 20; 30, 31) of a hand (15; 25) encompassing the steering wheel rim (6), characterised by an operating bead which is a component of the operating element (7 to 12) oriented almost parallel to an axis (18, 27) of the operating element (7 to 12) and which serves to form at least one operating surface (23, 24; 28), and by at least one additional operating surface (21, 22; 29) oriented at an angle to the operating surface (23, 24; 28) of the operating bead and formed by the operating element (7 to 12), wherein operating forces directed onto the two operating surfaces (21 to 24; 28, 29) at an angle to each other cause pivoting of the operating element (7 to 12) in the same direction about the axis (18; 27).

2. Motor vehicle steering wheel according to claim 1, characterised in that the operating elements (7 to 12) of the contacts (16, 17; 26) are shaped and arranged on the steering wheel in such a way that they can be operated both by pressure in the direction of the impact absorber (1) and by pressure in a direction perpendicular to a steering wheel rim plane.

3. Motor vehicle steering wheel according to claim 1 or 2, characterised in that by means of the operating element (10 to 12) an electrical contact (26) can be operated by pivoting the operating element (10 to 12) in the same direction about an axis (27) in case of both operation from above and operation from below.

4. Motor vehicle steering wheel according to claim 1 or 2, characterised in that by means of the operating element (7 to 9) two electrical contacts (16, 17) can be operated, both contacts (16, 17) being capable of being operated both from above and from below by the fact that the operating element is pivotable about an axis (18) by fingers (19, 20) located above and below the steering wheel rim (6) in two directions each.

## Revendications

1. Volant de direction pour véhicule automobile, comprenant un cercle de volant (6) et au mains un contact électrique (16, 17; 26) à actionner manuellement, qui est disposé en tant que contacteur ou touche sur un moveu (1) ou sur un rayon (2 à 5) du volant, un élément de manoeuvre (7 à 12) avec plusieurs surfaces de manoeuvre (21 à 24; 28, 29) étant prévu pour l'actionnement du contact (16, 17; 26), élément qui par les surfaces de manoeuvre (21 à 24; 28, 29) dépasse le moveu (1) ou le rayon (2 à 5) au moins d'un côté pour faire saillie ainsi dans un seul espace libre (13, 14) à l'intérieur du cercle de volant (6), le contact (16, 17; 26) pouvant être manoeuvré par l'élément de manoeuvre (7 à 12) aussi bien depuis le haut que depuis le bas à l'aide de différents doigts (19, 20; 30, 31) d'une main (15; 25) enserrant le cercle de volant (6), caractérisé par un bourrelet de manoeuvre qui est une partie constitutive de l'élément de manoeuvre (7 à 12) orientée sensiblement parallèlement à un axe (18, 27) de l'élément de manoeuvre (7 à 12) et qui sert à former au moins une surface de manoeuvre (23, 24; 28), et par au moins une surface de manoeuvre (21, 22; 29) supplémentaire, inclinée par rapport à la surface de manoeuvre (23, 24; 28) du bourrelet de manoeuvre, des forces de manoeuvre orientées de façon oblique l'une par rapport à l'autre sur les deux surfaces de manoeuvre (21 à 24; 28, 29) provoquant un pivotement dans le même sens de l'élément de manoeuvre (7 à 12) autour de l'axe (18; 27).

2. Volant suivant la revendication 1, caractérisé par le fait que les éléments de manoeuvre (7 à 12) des contacts (16, 17; 26) sont conformés et sont disposés sur le volant de telle manière qu'ils puissent être manoeuvrés aussi bien par pression en direction du moveu (1) que par pression suivant une direction perpendiculaire au plan du cercle du volant.

3. Volant suivant la revendication 1 ou 2, caractérisé par le fait qu'un contact électrique (26) est actionné à l'aide de l'élément de manoeuvre (10 à 12) par pivotement de l'élément de manoeuvre (10 à 12) dans le même sens autour d'un axe (27) aussi bien en cas de manoeuvre depuis le haut qu'en cas de manoeuvre depuis le bas.

4. Volant suivant la revendication 1 ou 2, caractérisé par le fait que deux contacts électriques (16, 17) sont actionnés à l'aide de l'élément de manoeuvre (7 à 9), les deux contacts (16, 17) pouvant être manoeuvrés aussi bien depuis le haut que depuis le bas, par pivotement de l'élément de manoeuvre respectivement dans deux sens autour d'un axe (18) à l'aide de doigts (19, 20) se trouvant au-dessus et de doigts se trouvant en dessous du cercle de volant (6).
